# EUROPÄISCHE PATENTANMELDUNG

(11) **EP 2 085 698 A1**
(43) Veröffentlichungstag der Anmeldung: **05.08.2009**
(21) Anmeldenummer: 08001941.7
(22) Anmeldetag: 01.02.2008
(51) Int. Cl.: F23R 3/34, F23C 9/00

(54) **Pilotierung eines Strahlbrenners mit einem,,Trapped Vortex'' Piloten**

(71) Anmelder: Siemens Aktiengesellschaft, 80333 München (DE)
(72) Erfinder: Hase, Matthias, Dr., 45470 Mülheim an der Ruhr (DE); Kaufmann, Peter, 47447 Moers (DE); Van Kampen, Jaap, Dr., 6042 AR Roermond (NL)

(57) **Zusammenfassung**

Es wird ein Verfahren zur Stabilisierung von mindestens einer von einer Strahldüse (5) erzeugten Strahlflamme (10) eines Verbrennungssystems offenbart, worin mit Hilfe einer Pilotbrennstoffdüse (6, 20) ein Heißgaswirbel (trapped vortex) (12) erzeugt wird, der den durch die Strahldüse (5) erzeugten Heißgasstrom (13, 15) unterstützt bzw. die stabile Entstehung des Heißgasstromes (13, 15) gewährleistet. Zudem wird eine Brenneranordnung (1, 101, 201, 301, 401, 501) beschrieben, welche mindestens eine Strahldüse (5) und mindestens eine Pilotbrennstoffdüse (6, 20) umfasst und in der die Pilotbrennstoffdüse (6, 20) so angeordnet ist, dass mit ihrer Hilfe ein Heißgaswirbel (12) erzeugt werden kann, der einen durch die Strahldüse (5) erzeugbaren Heißgasstrom (13, 15) unterstützt bzw. die stabile Entstehung des Heißgasstromes (13, 15) gewährleistet.

## Beschreibung

Die vorliegende Erfindung betrifft ein Verfahren zur Stabilisierung einer von einer Strahldüse erzeugten Strahlflamme eines Verbrennungssystems. Darüber hinaus bezieht sich die vorliegende Erfindung auf eine Brenneranordnung, welche mindestens eine Strahldüse und mindestens eine Pilotbrennstoffdüse umfasst.

Auf vorgemischten Strahlflammen basierende Verbrennungssysteme bieten gegenüber drallstabilisierten Systemen aufgrund der verteilten Wärmefreisetzungszonen und der fehlenden drallinduzierten Wirbel insbesondere aus thermoakustischer Sicht Vorteile. Durch geeignete Wahl des Strahlimpulses lassen sich kleinskalige Strömungsstrukturen erzeugen, die akustisch induzierte Wärmefreisetzungsfluktuationen dissipieren und somit Druckpulsationen, die für drallstabilisierte Flammen typisch sind, unterdrücken.

Die Strahlflammen werden durch Einmischen heißer rezirkulierender Gase stabilisiert. Die hierfür nötigen Temperaturen der Rezirkulationszone können in Gasturbinen, insbesondere im unteren Teillastbereich, durch die bekannte Ringanordnung der Strahlen mit einer zentralen Rezirkulationszone nicht gewährleistet werden. Daher wird zumindest im Teillastbereich eine zusätzliche Pilotierung benötigt.

Es ist daher eine Aufgabe der vorliegenden Erfindung, ein vorteilhaftes Verfahren zur Stabilisierung einer von einer Strahldüse erzeugten Strahlflamme eines Verbrennungssystems zur Verfügung zu stellen. Es ist eine weitere Aufgabe der vorliegenden Erfindung, eine vorteilhafte Brenneranordnung zur Verfügung zu stellen.

Die erste Aufgabe wird durch ein Verfahren nach Anspruch 1 gelöst. Die zweite Aufgabe wird durch eine Brenneranordnung nach Anspruch 8 gelöst. Die abhängigen Ansprüche beinhalten weitere, vorteilhafte Ausgestaltungen der Erfindung.

Im Rahmen des erfindungsgemäßen Verfahrens zur Stabilisierung von mindestens einer von einer Strahldüse erzeugten Strahlflamme eines Verbrennungssystems wird mit Hilfe einer Pilotbrennstoffdüse ein Heißgaswirbel (trapped vortex) erzeugt, der den durch die Strahldüse erzeugten Heißgasstrom unterstützt bzw. die stabile Entstehung des Heißgasstromes gewährleistet. Das erfindungsgemäße Pilotierungskonzept basiert auf einem "Trapped Vortex" Piloten. Der Trapped Vortex Pilot ist dabei ein aus Forschung und Entwicklung bekanntes Konzept, bei dem typischerweise in eine Kavität Brennstoff eingedüst wird. Der Brennstoff wird in der Kavität mit Luft vermischt und wird in der Kavität auch verbrannt. Dabei bildet sich in der Kavität ein stabiler Wirbelfluss aus, dessen Strömung zur Stabilisierung einer Flamme verwendet werden kann.

Im Rahmen der vorliegenden Erfindung kann die Pilotierung der Strahlflammen vorzugsweise in der Brennkammer stattfinden. Der mit Hilfe der Pilotbrennstoffdüse erzeugte Heißgaswirbel (trapped vortex) kann den durch die Strahldüse erzeugten Heißgasrezirkulationsstrom vorteilhaft unterstützen bzw. die stabile Entstehung des Heißgasstromes gewährleisteten. Vorzugsweise können mehrere Strahldüsen eines Strahlbrenners in Form eines Strahldüsenringes ringförmig in Bezug auf eine Mittelachse der Brennerkammer oder eines Brennkammerelementes angeordnet werden. Dabei kann die Pilotbrennstoffdüse so angeordnet werden, dass die durch sie erzeugten Heißgaswirbel die durch die Strahlen der Strahlflammen erzeugte, zentrale Rezirkulationszone unterstützen bzw. die stabile Entstehung des Heißgasstromes gewährleisten.

Weiterhin können mit Hilfe von mehreren, außerhalb des von den Strahldüsen gebildeten Ringes angeordneten Pilotbrennstoffdüsen Heißgaswirbel erzeugt werden, die den von den Strahldüsen erzeugten Heißgasstrom unterstützen. Zusätzlich oder alternativ dazu können mit Hilfe von, vorteilhafterweise mehreren, innerhalb des von den Strahldüsen gebildeten Ringes angeordneten Pilotbrennstoffdüsen Heißgaswirbel erzeugt werden, die den von den Strahldüsen erzeugen Heißgasrezirkulationsstrom unterstützen.

Der mit Hilfe der Pilotbrennstoffdüse erzeugten Pilotflamme kann Brennstoff oder ein Brennstoff-Luft-Gemisch so zugeführt werden, dass die Drehrichtung des erzeugten Heißgaswirbels unterstützt wird oder die Brennstoffzuführung der Drehrichtung des erzeugten Heißgaswirbels entgegengerichtet ist. Im Falle, dass die Brennstoffzuführung oder die Brennstoff-Luft-Gemisch-Zuführung die Drehrichtung des Heißgaswirbels unterstützt, können insbesondere die bereits mit Sauerstoff abgereicherten Verbrennungsgase im Rahmen des Pilotbrenners verwendet werden. Im Falle, dass die Brennstoffzuführung oder die Brennstoff-Luft-Gemisch-Zuführung der Drehrichtung des Heißgaswirbels entgegengerichtet ist, wird eine verbesserte Durchmischung des Brennstoffes mit der für die Verbrennung erforderlichen Luft erzielt.

Die erfindungsgemäße Brenneranordnung umfasst mindestens eine Strahldüse und mindestens eine Pilotbrennstoffdüse. Die Pilotbrennstoffdüse ist in der Brenneranordnung so angeordnet, dass mit ihrer Hilfe ein Heißgaswirbel (trapped vortex) erzeugt werden kann, der einen durch die Strahldüse erzeugbaren Heißgasstrom unterstützt bzw. die stabile Entstehung des Heißgasstromes gewährleistet. Vorteilhafterweise können mehrere Strahldüsen in Form eines Strahldüsenringes ringförmig in Bezug auf eine Mittelachse der Brenneranordnung angeordnet sein. In diesem Fall kann mindestens eine Pilotbrennstoffdüse außerhalb des Ringes angeordnet sein. Insbesondere kann die Brenneranordnung eine Kavität umfassen, in der die Pilotbrennstoffdüse angeordnet ist.

Die Brenneranordnung kann beispielsweise mindestens eine Wand umfassen, in der die Kavität angeordnet sein kann. Die Wand kann insbesondere an die mindestens eine Strahldüse angrenzen. Bei der Wand kann es sich zum Beispiel um die Wand einer Trägerplatte oder eine Brennkammerwand handeln. Selbstverständlich können auch sowohl die Wand einer Trägerplatte als auch eine Brennkammerwand vorhanden sein, in denen Kavitäten angeordnet sind. Vorteilhafterweise kann sich die Kavität ringförmig um den aus den Strahldüsen gebildeten Ring herum erstrecken.

Weiterhin kann mindestens eine Pilotbrennstoffdüse innerhalb des aus den Strahldüsen gebildeten Strahldüsenringes angeordnet sein. In diesem Falle kann die Pilotbrennstoffdüse vorteilhafterweise in einer Trägerplatte der Brenneranordnung angeordnet sein. Zudem kann die Pilotbrennstoffdüse in einer Kavität angeordnet sein. Vorteilhafterweise können mehrere Pilotbrennstoffdüsen innerhalb des aus den Strahldüsen gebildeten Strahldüsenringes in Form eines inneren Pilotbrennstoffdüsenringes angeordnet sein. Im Falle, dass die Pilotbrennstoffdüsen in einer Kavität angeordnet sind, kann die Kavität als geschlossener Ring ausgeführt werden oder aus mehreren Kammern bestehen.

Es kann auch eine Pilotbrennstoffdüse innerhalb des aus den Strahldüsen gebildeten Strahldüsenringes zentral angeordnet sein. Die zentral angeordnete Pilotbrennstoffdüse kann insbesondere mit einer Luftzufuhr und mit einer Brennstoffzufuhr verbunden sein. Zudem kann die zentral angeordnete Pilotbrennstoffdüse eine Luftdüse und eine im Inneren der Luftdüse angeordnete Brennstoffdüse umfassen. Auf diese Weise kann bereits im Inneren der Pilotbrennstoffdüse ein Brennstoff-Luft-Gemisch erzeugt werden. Darüber hinaus können weitere Pilotbrennstoffdüsen in Form eines Pilotbrennstoffdüsenringes um die zentral angeordnete Pilotbrennstoffdüse angeordnet sein.

Die Pilotbrennstoffdüse kann weiterhin so angeordnet sein, dass die Brennstoffzufuhr die Drehrichtung des erzeugten Heißgaswirbels unterstützt oder dass zur Erzielung einer besseren Durchmischung von Brennstoff und Luft die Brennstoffzufuhr der Drehrichtung des erzeugten Heißgaswirbels entgegenwirkt.

Grundsätzlich können im Rahmen der vorliegenden Erfindung alle bekannten Trapped Vortex Brennersysteme, zum Beispiel auch doppelkammrige Systeme, verwendet werden. Die Brennstoffzuführung kann so ausgeführt sein, dass sie die Drehrichtung des Wirbels im "Trapped Vortex" Piloten unterstützt oder dieser für eine bessere Durchmischung entgegengerichtet ist. In dem Pilotbrenner können so die bereits mit Sauerstoff angereicherten Verbrennungsgase verwendet werden.

In dem Piloten wird sich eine helikale Struktur ausbilden, die dafür sorgt, dass insbesondere zwischen den Strahlen der Strahldüsen Heißgas aus dem Piloten in die Brennkammer gelangt. Im Bereich der Strahlen wird der Pilot mit Frischluft versorgt.

Bei der erfindungsgemäßen Brenneranordnung kann es sich beispielsweise um einen Teil einer Brennkammer oder um ein separates Brennerelement handeln. Die erfindungsgemäße Brenneranordnung kann auch als Brenner ausgestaltet sein.

Weitere Merkmale, Eigenschaften und Vorteile der vorliegenden Erfindung werden im Folgenden anhand von Ausführungsbeispielen unter Bezugnahme auf die beigefügten Figuren näher beschrieben. Die beschriebenen Merkmale können sowohl einzeln als auch in Kombination miteinander vorteilhaft sein.
- Fig. 1: zeigt schematisch einen Querschnitt durch einen Teil einer erfindungsgemäßen Brenneranordnung.
- Fig. 2: zeigt schematisch einen Querschnitt durch einen Teil der Trägerplatte einer erfindungsgemäßen Brenneranordnung.
- Fig. 3: zeigt schematisch einen Schnitt durch einen Teil der Trägerplatte einer erfindungsgemäßen Brenneranordnung.
- Fig. 4: zeigt schematisch einen Schnitt durch einen Teil einer erfindungsgemäßen Brenneranordnung, welche mit einer zentral angeordneten Pilotbrennstoffdüse ausgestattet ist.
- Fig. 5: zeigt schematisch eine alternative Ausgestaltung der in Figur 4 gezeigten erfindungsgemäßen Brenneranordnung.
- Fig. 6: zeigt schematisch einen Schnitt durch eine weitere Variante eines Teiles einer erfindungsgemäßen Brenneranordnung.

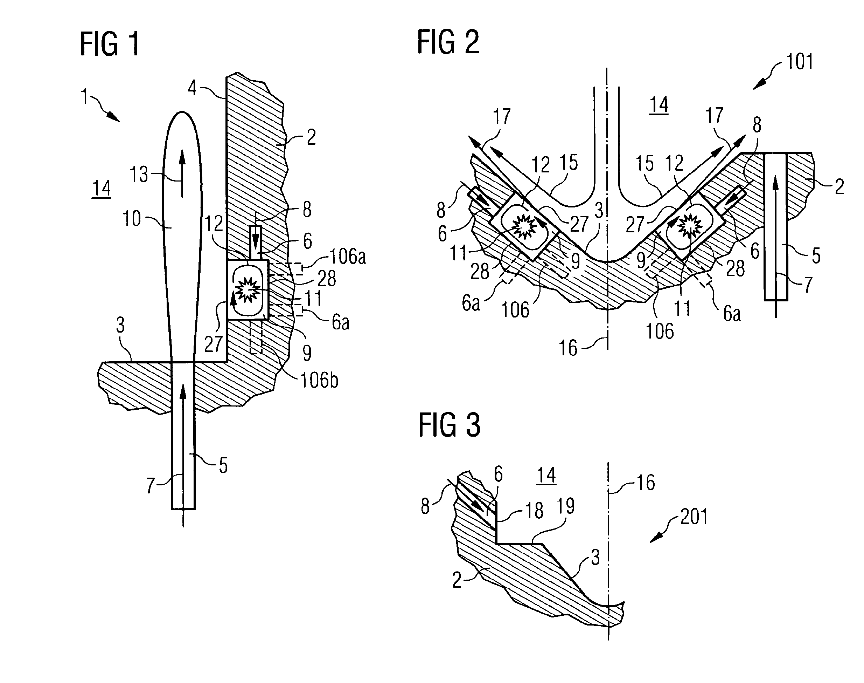

Im Folgenden wird ein erstes Ausführungsbeispiel der vorliegenden Erfindung anhand der Figur 1 näher erläutert. Die Figur 1 zeigt schematisch einen Schnitt durch einen Teil einer erfindungsgemäßen Brenneranordnung 1. Die Brenneranordnung 1 umfasst ein Gehäuse 2 mit einer Trägerplatte 3 und einer Wand 4. Bei der Trägerplatte 3 kann es sich um ein separates Bauelement oder um einen integralen Bestandteil der Brenneranordnung 1 handeln. In der Trägerplatte 3 befindet sich mindestens eine Strahldüse 5, durch welche ein Brennstoff-Luft-Gemisch 7 oder ein Brennstoff 7 in eine Brennkammer 14 eingedüst wird. Das in die Brennkammer 14 eingedüste Brennstoff-Luft-Gemisch 7 oder ein Brennstoff 7 verbrennt in der Brennkammer 14, wobei eine Strahlflamme 10 entsteht. Durch den Verbrennungsprozess wird ein Heißgasstrom gebildet, dessen Hauptströmungsrichtung durch einen Pfeil mit der Bezugsziffer 13 gekennzeichnet ist.

In der Wand 4 der Brenneranordnung 1 ist eine Kavität 9 ausgebildet. Die Kavität 9 umfasst eine Pilotbrennstoffdüse 6, durch welche Brennstoff 8 oder ein Brennstoff-Luft-Gemisch 8 so in die Kavität 9 eingedüst wird, dass sich in der Kavität 9 eine Pilotflamme 11 ausbildet und sich um diese Pilotflamme 11 ein stabiler Heißgaswirbel (trapped vortex) 12 bildet. Die Strömungsrichtung des Heißgaswirbels 12 ist dabei so ausgerichtet, dass die Strömungsrichtung des aus der Kavität 9 in die Brennkammer 14 strömenden Heißgases die Strömungsrichtung des von der Strahldüse erzeugten Heißgasstromes 13 unterstützt. Im vorliegenden Ausführungsbeispiel wird der Brennstoff 8 oder das Brennstoff-Luft-Gemisch 8 in die Kavität 9 antiparallel, d. h. in entgegengesetzter Richtung zu dem durch die Strahldüse 5 in die Brennkammer 14 eingedüsten Brennstoff-Luft-Gemisch eingedüst. Die Kavität 9, in der die Pilotbrennstoffdüse 6 angeordnet ist, weist eine brennkammerseitige Öffnung 27 und eine der Öffnung 27 gegenüberliegende Rückwand 28 auf, wobei die Pilotbrennstoffdüse 6 nahe der Rückwand 28 so angeordnet ist, dass der in die Kavität 9 einströmende Brennstoff 8 oder das Brennstoff-Luft-Gemisch 8 nahe der Rückwand 28 eine Strömungsrichtung aufweist, die der Hauptströmungsrichtung 13 des von der Strahldüse 5 ausgehenden Heißgasstroms 10 entgegengesetzt ist. Der dadurch entstehende Wirbel 12 führt im Bereich der Öffnung 27 dann zu einer Strömung, die parallel, d. h. in gleicher Richtung zur Hauptströmungsrichtung 13 des Heißgasstromes 10 verläuft.

Vorteilhafterweise umfasst die Brenneranordnung 1 mehrere, zu einem Strahldüsenring angeordnete Strahldüsen 5. Die Kavität 9 kann als kompletter, d. h. umlaufender Ring, der einmal um die Brennkammer 14 herum verläuft, ausgeführt sein und entlang des Umfanges mehrere Pilotbrennstoffdüsen 6 umfassen. Alternativ dazu kann eine Mehrzahl von einzelnen Kavitäten 9 um den Umfang der im Querschnitt kreisförmigen Brennkammer 14 herum angeordnet sein, sodass sie einen Kavitätenring bilden. In diesem Fall kann jede einzelne Kavität mindestens eine Pilotbrennstoffdüse 6 umfassen.

Eine alternative Position der Pilotbrennstoffdüse 6 in der Kavität 9, die ebenso wie die Position der Pilotbrennstoffdüse 6 eine die Drehrichtung des Heißgaswirbels 12 unterstützende Pilotgaseindüsung ermöglicht, ist durch die Bezugsziffer 6a gekennzeichnet. In diesem Fall strömt der Pilotbrennstoff senkrecht zur Rückwand 28 in die Kavität 9 ein. Weitere alternative Positionen einer Pilotbrennstoffdüse in der Kavität 9, die eine der Drehrichtung des Heißgaswirbels 12 gegenläufige Pilotgaseindüsung ermöglichen, sind durch die Bezugsziffern 106a und 106b gekennzeichnet. Durch die Pilotbrennstoffdüse 106a kann der Pilotbrennstoff senkrecht zur Rückwand 28 in die Kavität 9 eingedüst werden. Durch die Pilotbrennstoffdüse 106b kann der Pilotbrennstoff parallel zur Rückwand 28 in die Kavität 9 eingedüst werden.

Im Folgenden wird ein zweites Ausführungsbeispiel der vorliegenden Erfindung anhand der Figuren 2 und 3 näher erläutert. Elemente, die Elementen des ersten Ausführungsbeispieles entsprechen, sind mit denselben Bezugsziffern versehen und werden nicht erneut im Detail beschrieben.

Die Figur 2 zeigt schematisch einen Schnitt durch einen Teil einer Trägerplatte 3 einer erfindungsgemäßen Brenneranordnung 101. Die Mittelachse der Brenneranordnung 101 ist mit der Bezugsziffer 16 gekennzeichnet. Die Trägerplatte 3 umfasst mehrere, ringförmig um die Mittelachse 16 angeordnete Strahldüsen 5, von denen lediglich eine Strahldüse 5 in Figur 2 gezeigt ist. Der Bereich der Trägerplatte 3 zwischen der Strahldüse 5 und der Mittelachse 16 ist kegelförmig vertieft ausgestaltet. Die Trägerplatte 3 weist also eine zwischen der Strahldüse 5 und der Mittelachse 16 schräg verlaufende Oberfläche auf. Alternativ dazu kann die Trägerplatte auch eben ausgestaltet sein, also eine zwischen der Strahldüse 5 und der Mittelachse 16 senkrecht zur Mittelachse 16 verlaufende Oberfläche aufweisen.

Die Trägerplatte 3 umfasst mehrere, zwischen den Strahldüsen 5 und der Mittelachse 16 angeordnete Kavitäten 9. Die Kavitäten 9 sind vorzugsweise ringförmig um die Mittelachse 16 angeordnet und bilden so einen inneren Ring. Die Kavitäten 9 können, wie im Zusammenhang mit dem ersten Ausführungsbeispiel bereits beschrieben worden ist, einen Kavitätenring bilden. Alternativ kann auch eine Kavität 9 vorhanden sein, die als kompletter Ring, der einmal endlos um die Mittelachse 16 herum verläuft, ausgeführt ist.

Jede Kavität 9 umfasst mindestens eine Pilotbrennstoffdüse 6, durch welche Brennstoff 8 oder ein Brennstoff-Luft-Gemisch 8 in die Kavität 9 eingedüst wird. Der eingedüste Brennstoff 8 oder das Brennstoff-Luft-Gemisch 8 verbrennt in der Kavität 9 und bildet dort einen um eine Flamme 11 zentrierten Heißgaswirbel (trapped vortex) 12 aus. Die Strömungsrichtung des Heißgaswirbels 12 ist dabei so ausgerichtet, dass derjenige Teil des von der Pilotflamme 11 erzeugten Heißgasstromes, der in die Brennkammer 14 strömt, den Heißgasrezirkulationsstrom 15 in der Brennkammer 14 unterstützt. Der Heißgasrezirkulationsstrom 15 wird durch den Heißgasstrom der von den Strahldüsen 5 erzeugten Strahlflammen hervorgerufen. Der Heißgasrezirkulationsstrom 15 strömt von der Brennkammer 14 kommend im Bereich der Mittelachse 16 auf die Trägerplatte 3 der Brenneranordnung 101 zu und strömt dann radial von der Mittelachse 16 weg zu den Strahldüsen 5 hin.

Die in der Figur 2 gezeigten Kavitäten 9 haben einen rechteckigen Querschnitt. Die Pilotbrennstoffdüsen 6 sind in den Kavitäten 9 so angeordnet, dass der Brennstoff 8 oder das Brennstoff-Luft-Gemisch 8 in die jeweilige Kavität 9 antiparallel zu der Strömungsrichtung 15 des an der Oberfläche der Trägerplatte 3 vorbeiströmenden Heißgasrezirkulationsstroms eingedüst wird. Dabei unterstützt der in der jeweiligen Kavität 9 entstehende Heißgaswirbel die Strömungsrichtung des Heißgasrezirkulationsstroms 15. Dies wird im vorliegenden Ausführungsbeispiel dadurch erreicht, dass die jeweilige Pilotbrennstoffdüse 6 nahe an einer der Austrittsöffnung 27 der Kavität 9 gegenüberliegenden Rückwand 28 der Kavität 9 angeordnet ist. Diese Rückwand 28 erstreckt sich weitgehend parallel zur der Brennkammer 14 zugewandten Innenwand der Trägerplatte 3. Die Pilotbrennstoffdüse 6 ist so angeordnet, dass der Pilotbrennstoff parallel zur Rückwand 28 in die Kavität 9 einströmt.

Eine alternative Position der Pilotbrennstoffdüse 6 in der Kavität 9, die, ebenso wie die Position der Pilotbrennstoffdüse 6, eine die Drehrichtung des Heißgaswirbels 12 unterstützende Pilotgaseindüsung ermöglicht, ist durch die Bezugsziffer 6a gekennzeichnet. In diesem Fall strömt der Pilotbrennstoff senkrecht zur Rückwand 28 in die Kavität 9 ein. Weitere alternative Positionen einer Pilotbrennstoffdüse in der Kavität 9, die eine der Drehrichtung des Heißgaswirbels 12 gegenläufige Pilotgaseindüsung ermöglichen, sind durch die Bezugsziffern 106 gekennzeichnet. Durch die Pilotbrennstoffdüse 106 kann der Pilotbrennstoff parallel zur Rückwand 28 in die Kavität 9 eingedüst werden.

In der Figur 3 ist eine alternative Ausgestaltung der in der Figur 2 gezeigten Trägerplatte 3 im Querschnitt dargestellt. Die in der Figur 3 gezeigte Trägerplatte 3 umfasst anstelle der rechteckig ausgeformten Kavitäten 9 eine Aussparung, die aus einem parallel zur Mittelachse 16 verlaufenden Abschnitt 18 und einem senkrecht zur Mittelachse 16 verlaufenden Abschnitt 19 besteht. Zwischen diesen beiden Abschnitten 18, 19 kann durch entsprechenden Pilotbrennstoffeindüsung ebenfalls ein Heißgaswirbel (trapped vortex) erzeugt werden. Die Pilotbrennstoffeindüsung kann beispielsweise über eine in dem parallel zur Mittelachse 16 verlaufenden Abschnitt 18 angeordnete Pilotbrennstoffdüse 6 erfolgen.

Die in den ersten beiden Ausführungsbeispielen beschriebenen Ausführungsmöglichkeiten der erfindungsgemäßen Brenneranordnung können auch miteinander kombiniert werden. In diesem Fall umfasst die erfindungsgemäße Brenneranordnung sowohl in der Wand 4 des Gehäuses 2 als auch in der Trägerplatte 3 Kavitäten 9, die mit Pilotbrennstoffdüsen 6 ausgestattet sind.

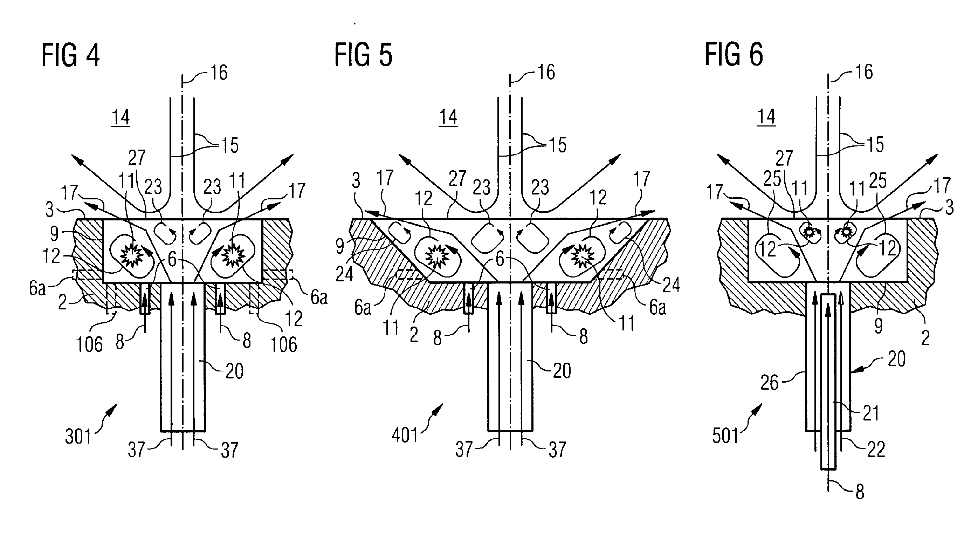

Im Folgenden wird ein drittes Ausführungsbeispiel der vorliegenden Erfindung anhand der Figuren 4 und 5 näher erläutert. Elemente, die Elementen der vorangegangenen Ausführungsbeispiele entsprechen, sind mit denselben Bezugsziffern versehen und werden nicht erneut im Detail beschrieben.

Die Figur 4 zeigt schematisch einen Schnitt durch einen Teil einer erfindungsgemäßen Brenneranordnung 301. Die erfindungsgemäße Brenneranordnung 301 umfasst eine Trägerplatte 3. Die Mittelachse der Brenneranordnung 301 ist durch die Bezugsziffer 16 gekennzeichnet. Um die Mittelachse 16 herum sind ringförmig mehrere Strahldüsen 5 angeordnet, die in der Figur 4 jedoch nicht gezeigt sind.

Konzentrisch zur Mittelachse 16 ist eine Kavität 9 angeordnet, die in einem Schnitt entlang der Mittelachse 16 einen rechteckigen Querschnitt aufweist. Ebenfalls konzentrisch zur Mittelachse 16 ist in der Kavität 9 eine Pilotbrennstoffdüse 20 angeordnet, durch die ein Brennstoff-Luft-Gemisch 37 oder Luft 37 in die Kavität 9 und von dort in die Brennkammer 14 eingedüst werden kann. Die zentral angeordnete primäre Pilotbrennstoffdüse 20 ist ringförmig von weiteren sekundären Pilotbrennstoffdüsen 6 umgeben, durch die Brennstoff 8 in die Kavität 9 eingedüst werden kann. Die sekundären Pilotbrennstoffdüsen 6 weisen einen geringeren Durchmesser als die zentral angeordnete primäre Pilotbrennstoffdüse 20 auf.

Die Pilotbrennstoffdüsen 6 sind dabei so im Boden der Kavität 9 angeordnet, dass der Brennstoff 8 parallel zur Mittelachse 16 in die Kavität 9 eingedüst werden kann. Durch das Eindüsen des Brennstoffes 8 oder des Brennstoff-Luft-Gemisches 8 durch die Pilotbrennstoffdüsen 6 bilden sich in der Kavität 9 Pilotflammen 11 aus, um die herum sich stabile Heißgaswirbel (trapped vortices) 12 bilden. Diese Heißgaswirbel 12 sind so ausgerichtet, dass ihre Drehrichtung die Strömungsrichtung 17 des in die Kavität 9 einströmenden Brennstoff-Luft-Gemisches 37 oder der Luft 37 aus der primären Pilotbrennstoffdüse 20 unterstützt. Dies wird dadurch erreicht, dass die sekundären Pilotbrennstoffdüsen 6 in der Kavität 9 nahe der primären Pilotbrennstoffdüse 20 angeordnet sind. Die Strömungsrichtung des durch die sekundären Pilotbrennstoffdüsen 6 in der Kavität 9 eingedüsten Brennstoffes 8 oder des Brennstoff-Luft-Gemisches 8 verläuft innerhalb der Kavität 9 parallel zu der Strömungsrichtung 17 des durch die primäre Pilotbrennstoffdüse 20 in die Kavität 9 einströmenden Brennstoff-Luft-Gemisches 37 oder der Luft 37 bzw. des resultierenden Heißgasstromes.

An der Öffnung 27 der Kavität 9 zur Brennkammer 14 trifft der von der primären Pilotbrennstoffdüse 20 verursachte Heißgasstrom 17 auf einen Heißgasrezirkulationsstrom 15, der parallel zur Mittelachse 16 entlang der Mittelachse 16 von der Brennkammer 14 auf die Öffnung 27 der Kavität 9 zuströmt. An der Öffnung 27 bzw. nahe der Öffnung 27 wird der Heißgasrezirkulationsstrom 15 umgelenkt und strömt dann von der Mittelachse 16 weg und zurück in die Brennkammer 14. Infolge des Zusammentreffens des Heißgasrezirkulationsstroms 15 mit dem von der primären Pilotbrennstoffdüse 20 verursachten Heißgasstrom 17 wird der von der primären Pilotbrennstoffdüse 20 verursachte Heißgasstrom 17 so abgelenkt, dass er nach dem Verlassen der Kavität 9 parallel zu dem Teil des Heißgasrezirkulationsstrom 15, der in die Brennkammer 14 zurückströmt, in die Brennkammer 14 einströmt.

In dem Bereich der Öffnung 27 der Kavität 9 nahe der Mittelachse 9, wo die beiden Strömungen 15, 17 antiparallel aufeinander treffen, bilden sich Heißgaswirbel 23 aus, deren Drehrichtung so verläuft, dass die Drehrichtung die Strömungsrichtung des Heißgasrezirkulationsstroms 15 unterstützt und dem von der primären Pilotbrennstoffdüse 20 verursachten Heißgasstrom 17 entgegengerichtet ist.

Die Strömungsrichtung des durch die sekundären Pilotbrennstoffdüsen 6 in der Kavität 9 eingedüsten Brennstoffes 8 oder des Brennstoff-Luft-Gemisches 8 verläuft innerhalb der Kavität 9 zunächst parallel zu der Strömungsrichtung 17 des durch die primäre Pilotbrennstoffdüse 20 in die Kavität 9 einströmenden Brennstoff-Luft-Gemisches 37 oder der Luft 37 bzw. des resultierenden Heißgasstromes. Aufgrund der beschriebenen Ablenkung des Heißgasstrom 17 in der Nähe der Öffnung 27 wird der durch die sekundären Pilotbrennstoffdüsen 6 verursachte Heißgasstrom in der Nähe der Öffnung 27 in der Kavität 9 umgelenkt und es bildet sich so in der Kavität 9 ein Heißgaswirbel 12 aus, dessen Drehrichtung die Strömungsrichtung des von der primären Pilotbrennstoffdüse 20 verursachten Heißgasstroms 17 unterstützt. Im Bereich des Heißgaswirbels 12 bildet sich eine stabile Flamme 11 aus.

Eine alternative Anordnung der Pilotbrennstoffdüsen 6 in der Kavität 9, die, ebenso wie die Positionen der Pilotbrennstoffdüsen 6, eine die Drehrichtung des Heißgaswirbels 12 unterstützende Pilotgaseindüsung ermöglicht, ist durch die Bezugsziffer 6a gekennzeichnet. In diesem Fall strömt der Pilotbrennstoff senkrecht zur Mittelachse 16 in die Kavität 9 ein. Eine weitere alternative Anordnung der Pilotbrennstoffdüsen in der Kavität 9, die eine der Drehrichtung des Heißgaswirbels 12 gegenläufige Pilotgaseindüsung ermöglicht, ist durch die Bezugsziffern 106 gekennzeichnet. Durch die Pilotbrennstoffdüse 106 kann der Pilotbrennstoff parallel zur Mittelachse 16 in die Kavität 9 eingedüst werden.

Die Figur 5 zeigt eine alternative Ausgestaltung der in der Figur 4 gezeigten Brenneranordnung 301. Die in der Figur 5 gezeigte Brenneranordnung 401 zeichnet sich im Unterschied zu der in der Figur 4 gezeigten Brenneranordnung 301 dadurch aus, dass die Kavität 9 einen trapezförmigen, sich zur Brennkammer 14 hin weitenden Querschnitt aufweist. In Folge dieser Ausgestaltung bilden sich zusätzlich zu den im Zusammenhang mit der Figur 4 beschriebenen Heißgaswirbeln 12, 23 am äußeren Umfang der Kavität 9 im Bereich der Öffnung 27 der Kavität 9 zur Brennkammer 14 hin, weitere Heißgaswirbel 24 aus, deren Drehrichtung die Strömungsrichtung 17 des von der Pilotbrennstoffdüse 20 erzeugten Heißgasstroms unterstützt und der Drehrichtung der von den sekundären Pilotbrennstoffdüsen 6 hervorgerufenen Heißgaswirbel 12 entgegengerichtet ist. Alternativ zu dem in der Figur 5 gezeigten Beispiel kann die Kavität auch wie in der Figur 3 gezeigt ausgestaltet sein.

Eine alternative Anordnung der Pilotbrennstoffdüsen 6 in der Kavität 9, die, ebenso wie die Positionen der Pilotbrennstoffdüsen 6, eine die Drehrichtung des Heißgaswirbels 12 unterstützende Pilotgaseindüsung ermöglicht, ist durch die Bezugsziffer 6a gekennzeichnet. In diesem Fall strömt der Pilotbrennstoff senkrecht zur Mittelachse 16 in die Kavität 9 ein.

Im Unterschied zu den ersten beiden Ausführungsbeispielen weisen die im Rahmen des dritten Ausführungsbeispieles beschriebenen Pilotbrennstoffdüsen 20 eine eigene Luftzuführung auf. Die im vorliegenden Ausführungsbeispiel beschriebenen Pilotbrennstoffdüsenanordnungen zeichnen sich dadurch aus, dass durch die zurückspringende Stufe die Strömung aufreißt und so die Rezirkulation der Hauptströmung 15 in der Brennkammer 14 nicht gestört wird. Außerdem kann sich in den entstehenden Ablösegebieten, also im Bereich der Wirbel 12, eine Flamme stabilisieren.

Im Folgenden wird ein viertes Ausführungsbeispiel der vorliegenden Erfindung anhand der Figur 6 näher erläutert. Elemente, die Elementen der vorangegangenen Ausführungsbeispiele entsprechen, sind mit denselben Bezugsziffern versehen und werden nicht erneut im Detail beschrieben.

Die Figur 6 zeigt schematisch einen Schnitt durch einen Teil einer erfindungsgemäßen Brenneranordnung 501. Die in der Figur 6 gezeigte Brenneranordnung 501 umfasst eine Trägerplatte 3. Um die Mittelachse 16 der Trägerplatte 3 sind ringförmig mehrere Strahldüsen angeordnet, die in der Figur 6 jedoch nicht gezeigt sind. Konzentrisch zur Mittelachse 16 befindet sich in der Trägerplatte 3 eine Kavität 9 mit einem in einem Schnitt entlang der Mittelachse 16 rechteckigen Querschnitt. Die Kavität 9 umfasst eine konzentrisch zur Mittelachse 16 angeordnete Pilotbrennstoffdüse 20.

Die Pilotbrennstoffdüse 20 umfasst eine konzentrisch zur Mittelachse 16 angeordnete Luftdüse 26. Im Inneren der Luftdüse 26 ist konzentrisch zur Mittelachse 16 eine Brennstoffdüse 21 angeordnet. Durch die Brennstoffdüse 21 wird Brennstoff 8 oder ein Brennstoff-Luft-Gemisch 8 in der Pilotbrennstoffdüse 20 zunächst mit Luft 22, die durch die Luftdüse 26 strömt, vermischt. Anschließend gelangt das auf diese Weise entstandene Brennstoff-Luft-Gemisch in die Kavität 9.

In der Kavität 9 verbrennt das Brennstoff-Luft-Gemisch und bildet nahe die Mittelachs 16 an der Öffnung 27 der Kavität 9 Pilotflammen 11 dort aus, wo der im Zusammenhang mit den Figuren 4 und 5 beschriebene Heißgasrezirkulationsstrom 15 antiparallel auf den durch die Pilotbrennstoffdüse 20 verursachten Heißgasstrom 17 trifft. Um die Pilotflammen 11 herum bilden sich stabile Heißgaswirbel (trapped vortices) 12, deren Drehrichtung die die Strömungsrichtung des Heißgasrezirkulationsstroms 15 in der Brennkammer 14 unterstützt und der Hauptströmungsrichtung 17 des durch die Pilotbrennstoffdüse 20 hervorgerufenen Heißgasstromes entgegengerichtet ist. Auch die Hauptströmungsrichtung 17 des durch die Pilotbrennstoffdüse 20 hervorgerufenen Heißgasstromes unterstützt den Heißgasrezirkulationsstrom 15. Weiterhin bilden sich in den radial äußeren Ecken der Kavität 9 an der der Öffnung 27 gegenüber liegenden Seite der Kavität 9 weitere Heißgaswirbel 25 aus, deren Drehrichtungen den von der Pilotbrennstoffdüse 20 kommenden Heißgasstrom 17 unterstützen. Auf diese Weise fördern auch diese Heißgaswirbel 25 mittelbar den Heißgasrezirkulationsstrom 15 in der Brennkammer 14.

Das in der Figur 6 gezeigte Ausführungsbeispiel basiert darauf, dass zwei Strömungen aufeinander treffen, wobei das sich ausbildende Gebiet mit niedrigen Strömungsgeschwindigkeiten mit Brennstoff versorgt wird. In diesem Bereich kann sich dann eine Flamme 11 stabilisieren.

Grundsätzlich lassen sich im Rahmen der vorliegenden Erfindung zur Stabilisierung der Flamme eines Strahlbrenners alle bekannten "Trapped Vortex" Brennersysteme verwenden.

## Patentansprüche

1. Verfahren zur Stabilisierung von mindestens einer von einer Strahldüse (5) erzeugten Strahlflamme (10) eines Verbrennungssystems,
worin mit Hilfe einer Pilotbrennstoffdüse (6, 20, 21) ein Heißgaswirbel (trapped vortex) (12) erzeugt wird, der den durch die Strahldüse (5) erzeugten Heißgasstrom (13, 15) unterstützt bzw. die stabile Entstehung des Heißgasstromes (13, 15) gewährleistet.

2. Verfahren nach Anspruch 1,
worin der mit Hilfe der Pilotbrennstoffdüse (6, 20, 21) erzeugte Heißgaswirbel (12), den durch die Strahldüse (5) erzeugten Heißgasrezirkulationsstrom (15) unterstützt bzw. die stabile Entstehung des Heißgasstromes (13, 15) gewährleistet.

3. Verfahren nach Anspruch 1 oder 2,
worin mehrere Strahldüsen (5) eines Strahlbrenners in einem Ring angeordnet werden.

4. Verfahren nach Anspruch 3,
worin mit Hilfe von mehreren außerhalb des Ringes angeordneten Pilotbrennstoffdüsen (6) Heißgaswirbel (12) erzeugt werden.

5. Verfahren nach Anspruch 3 oder 4,
worin mit Hilfe von mehreren innerhalb des Ringes angeordneten Pilotbrennstoffdüsen (6, 20, 21) Heißgaswirbel (12) erzeugt werden, die den von den Strahldüsen (5) erzeugten Heißgasrezirkulationsstrom (15) unterstützen.

6. Verfahren nach einem der Ansprüche 1 bis 5,
bei dem der Heißgaswirbel (12) die Strahlflamme (10) oder deren Rückströmung tangiert,
wobei zur Unterstützung des Heißgasstroms die Strömungsrichtung desjenigen Teils des Heißgaswirbels (12), welcher die Strahlflamme (10) oder deren Rückströmung tangiert, zur Strömungsrichtung der Strahlflamme (10) oder zur Strömungsrichtung deren Rückströmung zumindest teilweise gleichgerichtet ist.

7. Verfahren nach einem der Ansprüche 1 bis 6,
worin einer mit Hilfe der Pilotbrennstoffdüse (6, 20, 21) erzeugten Pilotflamme (11) Brennstoff (8) oder ein Brennstoff-Luft-Gemisch (8) so zugeführt wird, dass durch die Brennstoffzuführung die Drehrichtung des erzeugten Heißgaswirbels (12) unterstützt wird oder die Brennstoffzuführung der Drehrichtung des erzeugten Heißgaswirbels (12) entgegengerichtet ist.

8. Brenneranordnung (1, 101, 201, 301, 401, 501),
welche mindestens eine Strahldüse (5) und mindestens eine Pilotbrennstoffdüse (6, 20, 21) umfasst und in der die Pilotbrennstoffdüse (6, 20, 21) so angeordnet ist, dass mit ihrer Hilfe ein Heißgaswirbel (12) erzeugt werden kann, der einen durch die Strahldüse (5) erzeugbaren Heißgasstrom (13, 15) unterstützt bzw. die stabile Entstehung des Heißgasstromes (13, 15) gewährleistet.

9. Brenneranordnung (1, 101, 201, 301, 401, 501) nach Anspruch 8,
worin mehrere Strahldüsen (5) in Form eines Strahldüsenringes ringförmig in Bezug auf eine Mittelachse (16) der Brenneranordnung (1, 101, 201, 301, 401, 501) angeordnet sind.

10. Brenneranordnung (1, 101, 201, 301, 401, 501) nach Anspruch 9,
worin mindestens eine Pilotbrennstoffdüse (6) außerhalb des Strahldüsenringes angeordnet ist.

11. Brenneranordnung (1, 101, 201, 301, 401, 501) nach Anspruch 10,
worin die Pilotbrennstoffdüse (6) in einer Kavität (9) angeordnet ist.

12. Brenneranordnung (1, 101, 201, 301, 401, 501) nach Anspruch 11,
worin die Brenneranordnung (1, 101, 201, 301, 401, 501) mindestens eine Wand (4) umfasst und die Kavität (9) in der Wand (4) der Brenneranordnung (1, 101, 201, 301, 401, 501) angeordnet ist.

13. Brenneranordnung (1, 101, 201, 301, 401, 501) nach Anspruch 11 oder 12,
worin sich die Kavität (9) ringförmig um den Strahldüsenring herum erstreckt.

14. Brenneranordnung (1, 101, 201, 301, 401, 501) nach einem der Ansprüche 9 bis 13,
worin mindestens eine Pilotbrennstoffdüse (6, 20, 21) innerhalb des Strahldüsenringes angeordnet ist.

15. Brenneranordnung (1, 101, 201, 301, 401, 501) nach Anspruch 14,
worin die Pilotbrennstoffdüse (6, 20) in einer Trägerplatte (3) der Brenneranordnung (1, 101, 201, 301, 401, 501) angeordnet ist.

16. Brenneranordnung (1, 101, 201, 301, 401, 501) nach Anspruch 14 oder 15,
worin die Pilotbrennstoffdüse (6, 20, 21) in einer Kavität (9) angeordnet ist.

17. Brenneranordnung (1, 101, 201, 301, 401, 501) nach einem der Ansprüche 14 bis 16,
worin mehrere Pilotbrennstoffdüsen (6) innerhalb des aus den Strahldüsen (5) gebildeten Strahldüsenringes in Form eines inneren Pilotbrennstoffdüsenringes angeordnet sind.

18. Brenneranordnung (1, 101, 201, 301, 401, 501) nach einem der Ansprüche 14 bis 16,
worin eine Pilotbrennstoffdüse (20, 21) innerhalb des aus den Strahldüsen (5) gebildeten Strahldüsenringes zentral angeordnet ist.

19. Brenneranordnung (1, 101, 201, 301, 401, 501) nach Anspruch 18,
worin die zentral angeordnete Pilotbrennstoffdüse (20) mit einer Luftzufuhr und mit einer Brennstoffzufuhr verbunden ist.

20. Brenneranordnung (1, 101, 201, 301, 401, 501) nach Anspruch 19,
worin die zentral angeordnete Pilotbrennstoffdüse (20) eine im Inneren einer Luftdüse (26) angeordnete Brennstoffdüse (21) umfasst.

21. Brenneranordnung (1, 101, 201, 301, 401, 501) nach einem der Ansprüche 18 bis 20,
worin weitere Pilotbrennstoffdüsen (6) in Form eines Pilotbrennstoffdüsenringes um die zentral angeordnete Pilotbrennstoffdüse (20, 21) angeordnet sind.

22. Brenneranordnung (1, 101, 201, 301, 401, 501) nach einem der Ansprüche 8 bis 21,
worin die Pilotbrennstoffdüse (6, 20, 21) so angeordnet ist, dass die Brennstoffzufuhr die Drehrichtung des erzeugten Heißgaswirbels (12) unterstützt oder dass zur Erzielung einer besseren Durchmischung von Brennstoff und Luft die Brennstoffzufuhr der Drehrichtung des erzeugten Heißgaswirbels (12) entgegengewirkt.
